# FASCICULE DE BREVET EUROPEEN

(11) **EP 1 902 455 B1**
(45) Date de publication et mention de la délivrance du brevet: **26.08.2009**
(21) Numéro de dépôt: 05786068.6
(22) Date de dépôt: 04.07.2005
(51) Int. Cl.: H01J 9/52, H01J 9/50, H01J 29/02, C09K 11/01

(54) **PROCEDE DE RECYCLAGE INTEGRAL DES TUBES CATHODIQUES**
INTEGRALES RECYCLING-VERFAHREN FÜR KATHODISCHE RÖHREN
INTEGRAL RECYCLING METHOD FOR CATHODIC TUBES

(43) Date de publication de la demande: 26.03.2008
(73) Titulaire: Recupyl, 38420 Domene (FR); Techni Services Environnement, 38420 Domene (FR)
(72) Inventeur: TEDJAR, Farouk, F-38100 Grenoble (FR); FOUDRAZ, Jean-Claude, F-38600 Fontaine (FR); DESMUEE, Isabelle, F-38190 Les Adrets (FR); PASQUIER, Christelle, F-38660 Saint Hilaire du Touvet (FR); MARTORANA, Savério, F-38420 Domene (FR)
(74) Mandataire: Hecké, Gérard
(86) Numéro de dépôt international: PCT/FR2005/001711
(87) Numéro de publication internationale: WO 2007/003722

(56) Documents cités:
- WO-A-03/081626
- DE-A1- 4 330 184
- US-A- 4 858 833
- US-A1- 2004 002 276
- PATENT ABSTRACTS OF JAPAN vol. 2000, no. 15, 6 avril 2001 (2001-04-06) & JP 2000 348621 A (TOSHIBA CORP), 15 décembre 2000 (2000-12-15)
- PATENT ABSTRACTS OF JAPAN vol. 1999, no. 08, 30 juin 1999 (1999-06-30) & JP 11 086734 A (MATSUSHITA ELECTRIC IND CO LTD), 30 mars 1999 (1999-03-30)

## Description

### Domaine technique de l'invention

L'invention concerne un procédé de recyclage intégral des tubes cathodiques.

### État de la technique

La production d'équipements électriques et électroniques est un domaine en forte croissance dans le monde Occidental.

L'innovation technologique et l'expansion du marché continuent à accélérer le processus de remplacement des produits dont la durée de vie n'excède pas les 3 ans. Ainsi, en 2000, la production française de déchets électriques et électroniques en fin de vie s'évaluait à 1,5 millions de tonnes dont la moitié provenait des ménages. Depuis, on observe une progression de 3 à 5 % par an de ce chiffre. On estime à 400 000 t par an le gisement européen de ces déchets dont 90 % vont encore en décharge. C'est pour cela que de nouvelles directives encadrent fortement ce déchet ; la dernière en date étant la directive 2002/96/CE du 27 Janvier 2003.

Ces nouvelles règles de gestion de tels produits imposent des taux de recyclage minimum. Or, parmi l'appareillage électrique et électronique en fin de vie, le tube cathodique représente un poids relativement important. Ainsi, pour atteindre le taux global de recyclage, il est impératif d'atteindre des taux de recyclage élevé pour le tube cathodique.

Un tube cathodique couleur comprend un verre de dalle contenant entre autres des oxydes de baryum et de strontium et un verre de cône, contenant de l'oxyde de plomb en grande quantité. Ces deux parties sont liées entre elles par un joint et elles sont revêtues de couches dites "fonctionnelles" constituées d'oxydes métalliques, de terres rares, de graphite et de fer. Des pièces métalliques sous forme de plaques sont placées à l'intérieur des tubes avant fermeture. En particulier la couche déposée sur la face interne des dalles se compose de matières électroluminescentes à base de Zinc, Cadmium, Yttrium et Europium. Tous ces composés tendent à conférer un caractère toxique à l'ensemble du tube cathodique et c'est pour cela que diverses solutions ont été proposées pour le traitement de ces tubes cathodiques.

Le brevet US4858833 décrit un procédé de recyclage des tubes par broyage puis traitement à l'acide fluoroborique suivi d'une séparation sélective des divers composants. Ce procédé présente plusieurs inconvénients, notamment par le mélange des verres, la dissolution de parties métalliques et l'emploi de l'acide fluoroborique. En particulier, cet acide a montré ses limites dans le traitement de déchets notamment à travers toutes les tentatives d'industrialisation de procédés (notamment dans le recyclage des piles). Les verres obtenus par mélange de la dalle (à base de baryum) et du cône (à base de plomb) sont difficilement valorisables en l'état.

Il s'est donc avéré indispensable de procéder à l'ouverture des tubes et la séparation des tubes. La première voie utilisée est la scie diamantée. Cette technique assure une bonne ouverture, mais elle s'accompagne d'importantes émissions de particules de verre et elle nécessite des opérations manuelles.

C'est pour lever cet inconvénient que le brevet DE4234706 décrit un procédé d'ouverture et de séparation des deux composants au moyen d'un fil chauffant.

Cette séparation ne peut avoir lieu que si des encoches sont réalisées sur l'ensemble du périmètre du tube cathodique et ce type d'opération, par sa cadence, limite la productivité et il nécessite la pose très précise du fil après réalisation des encoches.

Par ailleurs, la couche luminophore composée de matières électroluminescentes est actuellement enlevée par tout moyen physique et les poudres obtenues sont envoyées en centre de stockage pour déchets toxiques. Il n'y a pas encore de procédé industriel opérationnel qui offre un débouché pour ces poudres.

D'une manière générale, les procédés à l'oxalate pour la séparation des terres rares sont connus depuis fort longtemps puisqu'ils ont été proposés depuis le début des années 1900 et largement mis en oeuvre (C.James, J.Am.Chem.Soc. vol 30, p. 979, 1908). Ils sont efficaces pour des mélanges de lanthane, thorium, yttrium et cérium. Les procédés complets sont, par ailleurs, largement décrits dans les revues Journal of Soc. Chem. Eng, (R.W Urie, 46(437) année 1947 *et* E.S Pilkington 46(387) 1947*)* et J. Appl. Chem. [E.S Pilkington 2(265) année 1952 *et* 4(568) année 1954*].* Par contre la présence de zinc, de cadmium et d'yttrium complique singulièrement les opérations. En outre, le précipité, très fin, entraîne des impuretés (notamment les anions de l'acide de l'attaque). Enfin, la formation de complexes d'oxalate avec les autres produits, entraîne la surconsommation d'oxalate.

C'est pour cela que divers procédés ont été proposés. Nous avons déjà vu que le brevet US4858833 décrit un procédé de recyclage de ces poudres par voie fluoroborique suivie d'une précipitation d'oxalates. Outre les inconvénients de l'acide fluoroborique, l'obtention d'oxydes valorisables exige la calcination des oxalates, ce qui conduit à l'émission de CO₂.

Le brevet DE19918793 décrit un procédé de recyclage de ces poudres par attaque à l'acide nitrique suivie d'une précipitation aux carbonates puis une calcination pour obtenir des oxydes. Là aussi, les inconvénients sont principalement liés aux émissions d'oxydes d'azote et de CO₂.

### Objet de l'invention

L'invention a pour but un procédé de recyclage intégral des tubes cathodiques permettant de palier à ces différents inconvénients.

Selon l'invention, ce but est atteint par les revendications annexées.

Plus particulièrement, ce but est atteint par le fait que le procédé permet le recyclage des verres qui composent lesdits tubes cathodiques et les luminophores déposés sur la face interne d'écrans au moyen de l'association des étapes suivantes :
- d'ouverture desdits tubes cathodiques au moyen d'une source laser
- du nettoyage à sec au moyen d'agents de traitement de surface
- et du recyclage des luminophores par voie acido-basique en présence de fluorures.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement les principales étapes du procédé de recyclage selon l'invention.
Les figures 2 et 3 représentent respectivement une observation au microscope électronique et une analyse par diffraction aux rayons X d'un verre de cône traité à sec par un agent de nettoyage à l'état solide.
La figure 4 représente une observation au microscope électronique d'un verre de dalle traité à sec par un agent de nettoyage à l'état solide.
Les figures 5 et 6 représentent respectivement une observation au microscope électronique à balayage et une analyse par diffraction aux rayons X de la fraction supérieure à 500 microns, obtenue lors d'une opération de tamisage réalisée pendant l'étape du recyclage des luminophores.
Les figures 7 et 8 représentent respectivement une observation au microscope électronique et une analyse par diffraction aux rayons X de premières particules extraites de la fraction fine (inférieure à 500 micromètre), obtenue lors d'une opération de tamisage réalisée pendant l'étape du recyclage des luminophores.
Les figures 9 et 10 représentent respectivement une observation au microscope électronique et une analyse par diffraction aux rayons X de secondes particules extraites de la fraction fine (inférieure à 500 micromètre), obtenue lors d'une opération de tamisage réalisée pendant l'étape du recyclage des luminophores.
La figure 11 représente schématiquement les différentes étapes d'un procédé chimique mis en oeuvre lors de l'étape de recyclage des luminophores.

### Description de modes particuliers de réalisation

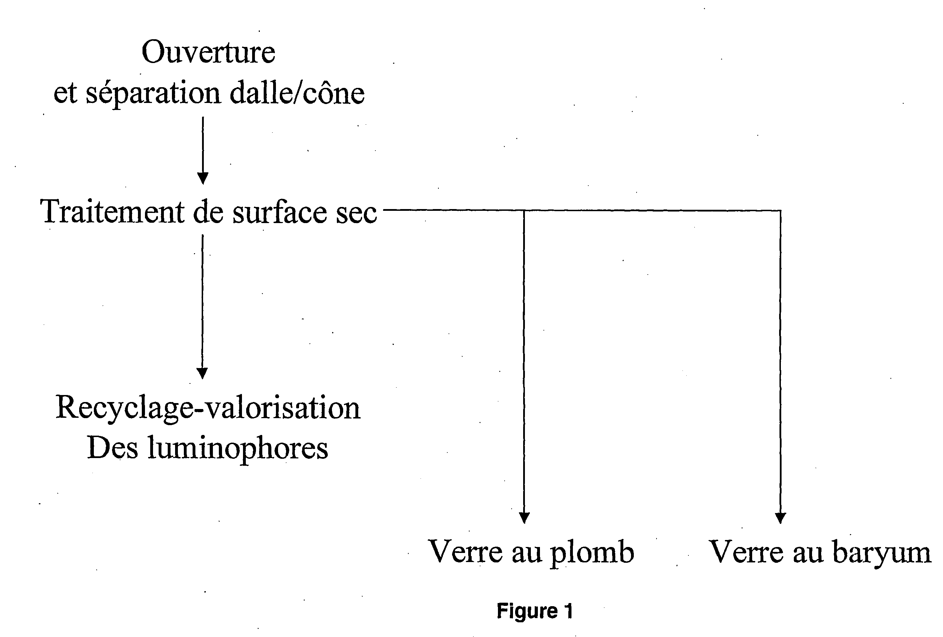

Comme illustré sur la figure 1, le procédé de recyclage intégral des tubes cathodiques selon l'invention consiste à associer un procédé d'ouverture des tubes cathodiques, un procédé de traitement de surface des verres et un procédé de recyclage des luminophores.

### I- Ouverture des tubes cathodiques

Les tubes cathodiques sont ouverts au moyen d'une source laser, telle qu'un laser à CO2 avec une puissance comprise entre 300 mW et 3 kW et une longueur d'onde comprise entre 10µm et 11µm.

Un premier avantage dans ce mode d'ouverture réside dans le fait que l'ouverture ne nécessite pas d'encoche initiale. Ceci est avantageux car les encoches ont pour conséquence de diminuer considérablement le temps d'ouverture. Un second avantage réside dans le fait que la puissance du laser est suffisante pour détruire complètement le joint, ce qui permet une ouverture directe à la jonction entre la dalle et le cône alors que l'ouverture par scie ou par fil chauffant laisse environ un centimètre du verre à dalle qui est lié au corps du cône.

Une fois les tubes cathodiques ouverts, pour une bonne valorisation des verres, il est important d'éliminer totalement tous les produits de revêtement qui se situent sur la face interne de la dalle et sur les faces internes et externes des cônes.

Dans un souci de protection des opérateurs au poste de travail et d'efficacité du traitement de surface, les techniques comme le brossage direct à sec sont écartées. Dans un souci de protection de l'environnement et d'élimination d'eau de rejets en quantités importantes, le lavage à l'eau est écarté.

### II - Nettoyage de surface des verres

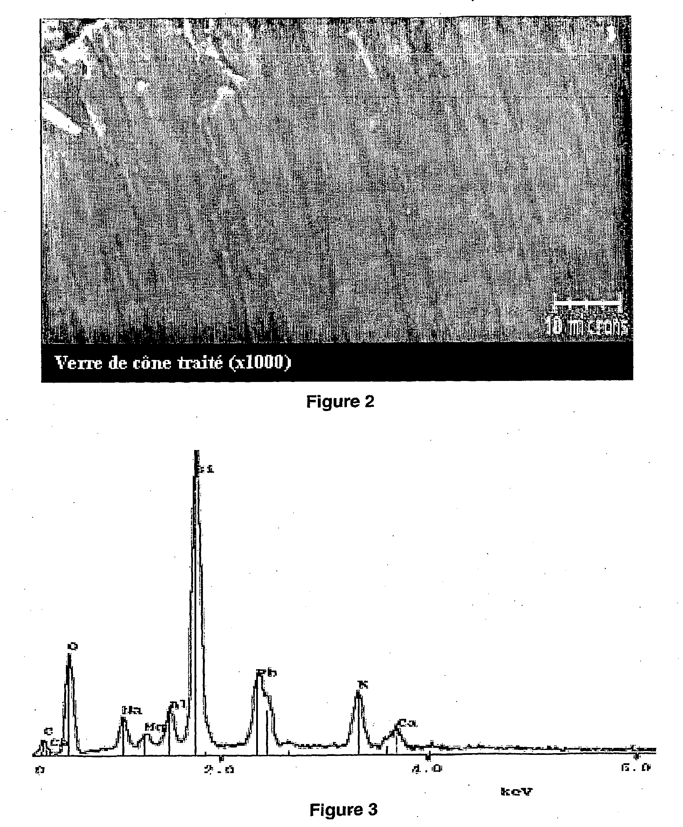

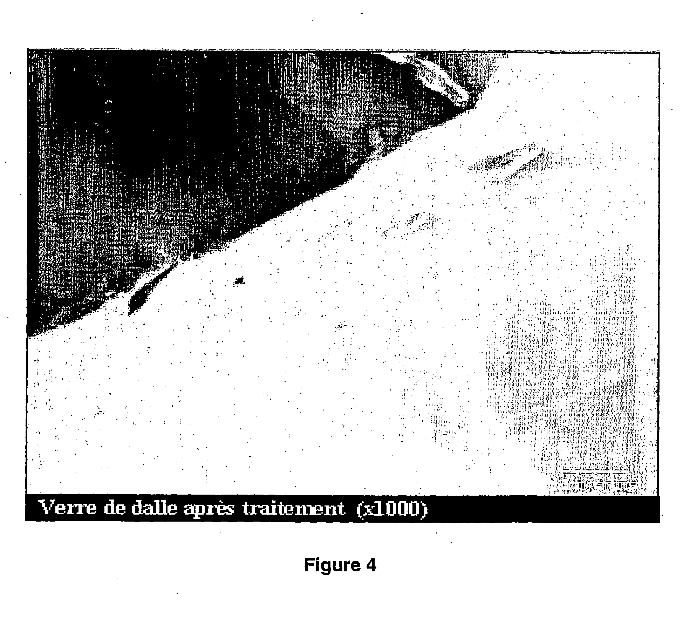

Les oxydes de surface sont, ainsi, ôtés par un traitement à sec au moyen d'agent de traitement de surface (agent de nettoyage) à l'état solide. Les agents utilisés sont, de préférence, choisis parmi la grenaille d'acier, le bicarbonate de sodium et la calcite. En effet, ces trois produits ont donné des résultats satisfaisants dans la mesure où les couches sont totalement éliminées, notamment sur les couches où elles sont très adhérentes, comme illustré sur les figures 2 et 3 et sur à figure 4 (clichés après traitement).

Ces trois produits sont préférentiellement choisis pour la facilité de traitement ultérieur des fractions mélangées comprenant l'agent de traitement de surface et les produits issus du nettoyage de surface.

Lorsque la grenaille d'acier est utilisée pour traiter la dalle et le cône, les produits obtenus sont traités par séparation magnétique, pour obtenir séparément les luminophores ou les autres oxydes d'une part et la grenaille d'acier d'autre part.

Lorsque le bicarbonate de sodium ou la calcite est utilisé pour traiter la dalle, ces produits sont éliminés au cours du traitement des luminophores.

### III - Recyclage des luminophores

Les poudres luminophores sont traitées par une voie ne comprenant ni oxalate ni ammoniaque. Le montage électroluminescent comprend une feuille d'aluminium et une couche de poudres luminophores. Un tamisage à 500 microns permet de séparer la très grande majorité des poudres.

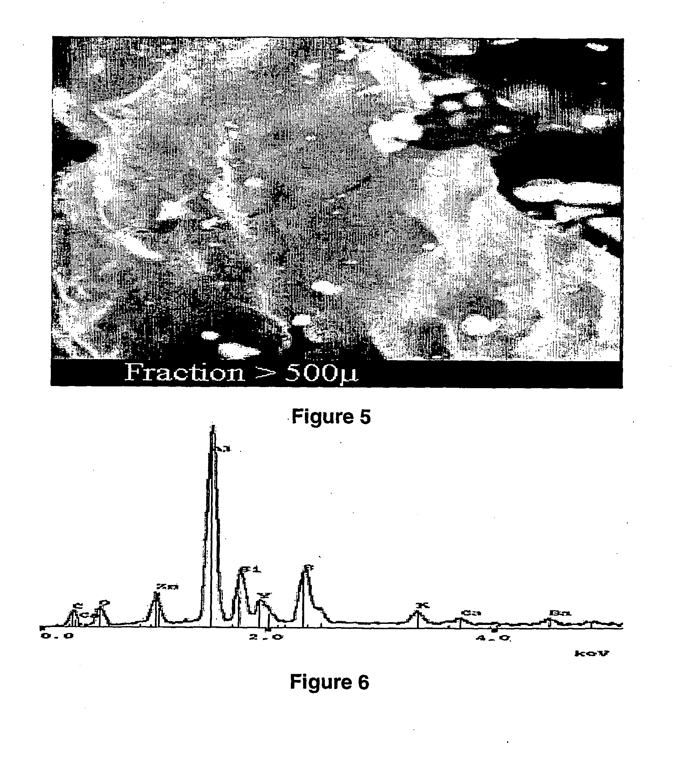

La fraction supérieure à 500 microns se compose principalement de feuillard d'aluminium comme le montrent les figures 5 (photographie au microscope électronique à balayage) et 6 (analyse par diffraction X).

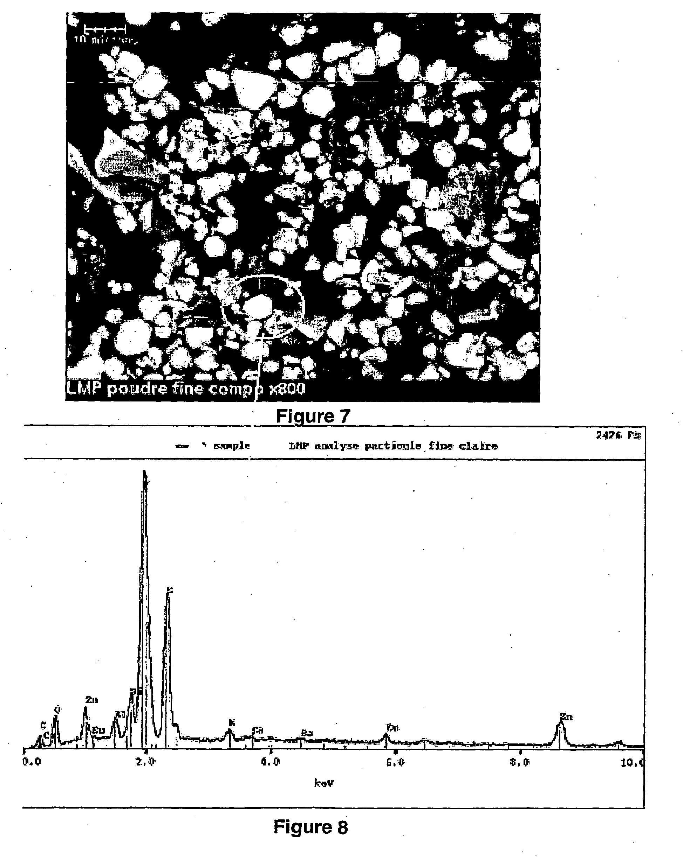

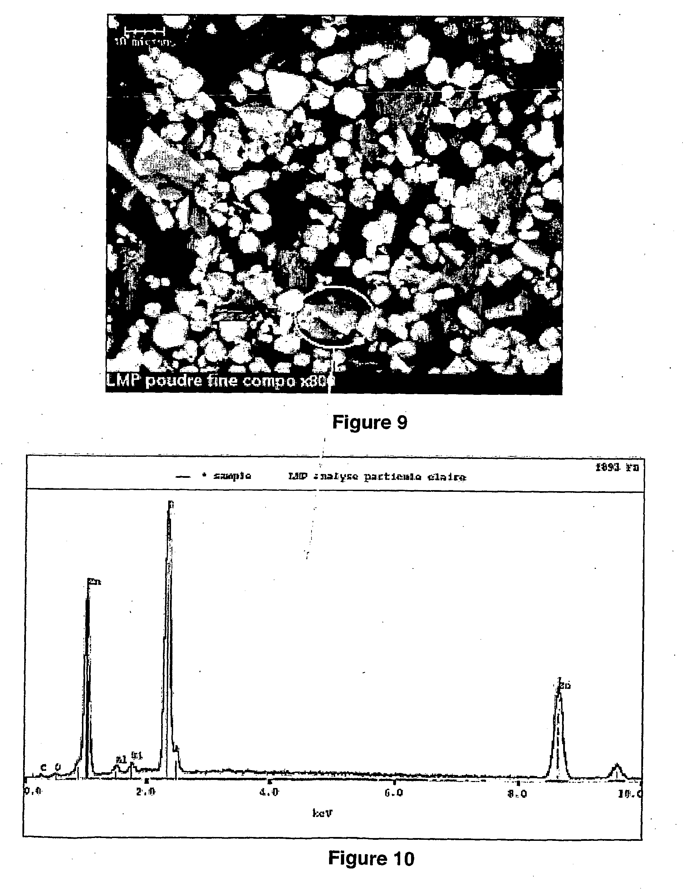

La fraction fine se compose majoritairement de zinc et d'yttrium avec présence d'europium, de fer et de manganèse, comme le montre l'observation au microscope électronique (figures 7 et 9) associée à une microanalyse par diffraction X (figures 8 et 10). Sur le plan de la répartition de phase, le zinc est engagé sous forme de sulfure alors que l'yttrium et l'europium sont présents sous forme d'oxyde et d'oxysulfures comme nous l'avons montré par une analyse par diffraction X.

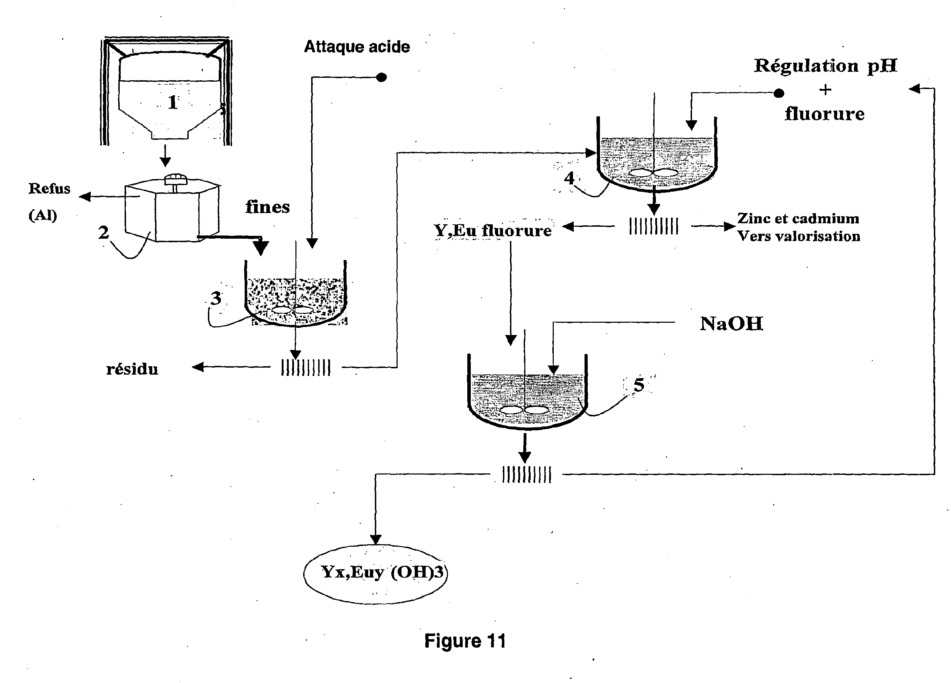

Après l'opération de tamisage, le procédé chimique proprement dit est mis en oeuvre comme représenté sur la figure 11. Ce procédé comprenant les étapes successives suivantes :

### 1 - Etape d'attaque

La poudre issue du traitement décrit ci-dessus (références 1 et 2 sur la figure 11) est soumise à une dissolution à l'acide sulfurique 2N à une température fixée à 70°C (référence 3 sur la figure 11). La concentration de l'acide peut varier de 15% en poids à 35% en poids. Mais, pour des raisons de compromis entre la vitesse de réaction et la dilution, elle est préférentiellement fixée à une valeur comprise entre 17% et 22% en poids. La solution issue de l'attaque acide est soumise à une filtration pour séparer la liqueur contenant les métaux des résidus insolubles.

### 2 - Etape de neutralisation - fluoruration

Lors de cette étape (référence 4 sur la figure 11), la liqueur est alors neutralisée jusqu'à un pH compris entre 2,8 et 4,4 au moyen de soude, de potasse, de chaux ou de magnésie. La valeur optimale de neutralisation pour une bonne mise en oeuvre des opérations ultérieures a été trouvée égale à 3,4.

La neutralisation peut avantageusement être effectuée au moyen de soude ou de potasse de concentration comprise entre 10 et 35% en poids. La solution neutralisé est alors mélangée avec une solution de fluorure alcalin (par exemple fluorure de potassium ou de sodium) chauffée à 50°C et dans un rapport stoechiométrique égal à celui du contenu en Yttrium + Europium augmenté de 10 % en poids. Le précipité formé est alors séparé puis lavé au moyen d'eau industrielle à une température comprise entre 30 et 40°C.
Cette eau de lavage est utilisée en tête de procédé pour préparer l'acide 2N à partir d'acide concentré.

### 3 - Etape d'hydroxylation

Le solide est alors mis en suspension dans une solution de soude à 30 % (référence 5 sur la figure 11) et un précipité blanchâtre se forme. Après filtration, la solution de fluorure légèrement alcaline est réutilisée à l'étape représentée par la référence 2 sur la figure 11; alors que le solide est séché à 105°C.

### IV -Recyclage des verres

Les tubes cathodiques se composent de deux types de verre :
- un verre au plomb pour le cône
- un verre au baryum et parfois strontium pour la dalle d'écran.

Pour une bonne valorisation, les verres doivent être traités séparément. Pour éviter les pollutions notamment du verre au baryum par le plomb, la fusion est effectuée dans une spire inductive refroidie extérieurement, formant ainsi un auto-creuset. Cet auto-creuset présente de nombreux avantages dont la formation d'une couche de verre figée autour du creuset, ce qui évite tout usage de matériau réfractaire et toute pollution des verres.

Pour obtenir une composition constante en sortie, les titres en silice, en baryte et en carbonate de strontium sont ajustés par ajout dans le creuset. Les lignes du champ électrique à haute fréquence provoquent des turbulences au sein du bain fondu qui induisent l'énorme avantage d'homogénéiser la matière en fusion. Cela permet d'obtenir une fusion uniforme et par conséquent, en sortie un verre de composition homogène avec absence totale d'infondus.

## Revendications

1. Procédé de recyclage intégral des tubes cathodiques **caractérisé en ce qu'**il permet le recyclage des verres qui composent lesdits tubes cathodiques et les luminophores déposés sur la face interne d'écrans au moyen de l'association des étapes suivantes:
- d'ouverture desdits tubes cathodiques au moyen d'une source laser
- du nettoyage à sec au moyen d'agents de traitement de surface
- et du recyclage des luminophores par voie acido-basique en présence de fluorures.

2. Procédé selon la revendication 1, **caractérisé en ce que** le traitement de surface des verres est effectué au moyen d'agent de surface choisis parmi la grenaille d'acier, le bicarbonate de soude et la calcite.

3. Procédé selon l'une des revendications 1 et 2, **caractérisé en ce que** les poudres électroluminescentes sont traitées par voie acide sulfurique de concentration comprise entre 15 % en poids et 35 % en poids, mais de préférence entre 17 % et 22 % en poids.

4. Procédé selon l'une quelconque des revendications 1 à 3, **caractérisé en ce que** la séparation de l'yttrium et de l'europium est effectuée au moyen d'un fluorure de sodium ou de potassium, à un pH compris entre 2,8 et 4,8 mais de préférence voisin de 3,4.

5. Procédé selon l'une quelconque des revendications 1 à 4, **caractérisé en ce que** l'extraction de l'yttrium et de l'europium se fait sous forme d'hydroxyde par alcalinisation, au moyen de soude ou de potasse de concentration comprise entre 10 % en poids et 35 % en poids.

6. Procédé selon l'une quelconque des revendications 1 à 5, **caractérisé en ce que** l'extraction de l'yttrium et de l'europium conduit à la régénération du fluorure alcalin réutilisable en tête de procédé dans la séparation desdits yttrium et europium.

7. Procédé selon l'une quelconque des revendications 1 à 6, **caractérisé en ce que** les verres séparés sont fondus au moyen d'un creuset à induction conçu de manière à réaliser un auto-creuset.

8. Procédé selon l'une quelconque des revendications 1 à 7, **caractérisé en ce que** la composition des verres est ajustée par ajout de silice, de baryte et de carbonate de strontium directement dans le creuset en fusion.

## Claims

1. Method for integral recycling of cathode ray tubes, **characterized in that** it enables the glasses composing said cathode ray tubes and the luminophores deposited on the internal surface of screens to be recycled by associating the following steps:
- opening said cathode ray tubes by means of a laser source
- dry cleaning by means of surface treatment agents
- and recycling of the luminophores by acid-base means in the presence of fluorides.

2. Method according to claim 1, **characterized in that** the surface treatment of glasses is performed by means of a surface agent chosen from steel shot, sodium bicarbonate and calcite.

3. Method according to one of claims 1 and 2, **characterized in that** the electroluminescent powders are treated by means of sulphuric acid with a concentration comprised between 15% in weight and 35% in weight, but preferably between 17% and 22% in weight.

4. Method according to any one of claims 1 to 3, **characterized in that** separation of the yttrium and the europium is performed by means of a sodium or potassium fluoride at a pH comprised between 2.8 and 4.8 but preferably close to 3.4.

5. Method according to any one of claims 1 to 4, **characterized in that** extraction of the yttrium and the europium is performed in hydroxide form by alkalisation by means of soda or potash with a concentration comprised between 10% and 35% in weight.

6. Method according to any one of claims 1 to 5, **characterized in that** extraction of the yttrium and the europium leads to regeneration of the alkaline fluoride which can be re-used in the first step of the process in separation of said yttrium and said europium.

7. Method according to any one of claims 1 to 6, **characterized in that** the separated glasses are melted by means of an induction crucible designed so as to constitute a self-crucible.

8. The method according to any one of claims 1 to 7, **characterized in that** the composition of the glasses is adjusted by adding silica, barita and strontium carbonate directly in the smelting crucible.

## Patentansprüche

1. Verfahren zum vollständigen Recycling von Kathodenstrahlröhren, **dadurch gekennzeichnet, dass** es das Recycling der Gläser ermöglicht, welche die Kathodenstrahlröhren und die Leuchtstoffe bilden, die an der Innenseite von Bildschirmen aufgebracht sind, und zwar durch Verbindung folgender Schritte:
- Öffnen der Kathodenstrahlröhren mittels einer Laserquelle
- Trockenreinigung mittels Oberflächenbehandlungsmitteln
- und saures und basisches Recycling der Leuchtstoffe unter Anwesenheit von Fluoriden.

2. Verfahren nach Anspruch 1, **dadurch gekennzeichnet, dass** die Oberflächenbehandlung der Gläser mittels Oberflächenbehandlungsmitteln erfolgt, die aus Stahlkies, Natriumbikarbonat und Kalzit ausgewählt sind.

3. Verfahren nach einem der Ansprüche 1 und 2, **dadurch gekennzeichnet, dass** die elektrolumineszenten Pulver mit Schwefelsäure einer Konzentration von 15 bis 35 Gew.-%, vorzugsweise jedoch von 17 bis 22 Gew.-%, behandelt werden.

4. Verfahren nach einem der Ansprüche 1 bis 3, **dadurch gekennzeichnet, dass** die Trennung des Yttriums und Europiums mittels eines Natrium- oder Kaliumfluorids mit einem pH-Wert von 2,8 bis 4,8, vorzugsweise jedoch nahe 3,4 erfolgt.

5. Verfahren nach einem der Ansprüche 1 bis 4, **dadurch gekennzeichnet, dass** die Extraktion des Yttriums und Europiums in Hydroxidform durch Alkalisierung mittels Natrium oder Kalium einer Konzentration von 10 bis 35 Gew.-% erfolgt.

6. Verfahren nach einem der Ansprüche 1 bis 5, **dadurch gekennzeichnet, dass** die Extraktion des Yttriums und Europiums zur Regenerierung des alkalischen Fluorids führt, das zu Beginn des Verfahrens bei der Trennung des besagten Yttriums und Europiums wiederverwendbar ist.

7. Verfahren nach einem der Ansprüche 1 bis 6, **dadurch gekennzeichnet, dass** die getrennten Gläser mittels eines Induktionstiegels eingeschmolzen werden, der so gebildet ist, dass er ein Skulltiegel bildet.

8. Verfahren nach einem der Ansprüche 1 bis 7, **dadurch gekennzeichnet, dass** die Zusammensetzung der Gläser durch Zusatz von Kieselerde, Baryt und Strontiumkarbonat direkt in den Schmelztiegel reguliert wird.
